# EUROPEAN PATENT APPLICATION

(11) **EP 4 730 074 A1**
(43) Date of publication of application: **22.04.2026**
(21) Application number: 25208708.5
(22) Date of filing: 14.10.2025
(51) Int. Cl.: G06F 1/16, G06F 1/26

(54) **ENHANCED DATA-POWER SYSTEM FOR ELECTRONIC DEVICES**

(30) Priority: 15.10.2024 US 202463707739 P; 27.01.2025 US 202519037832
(71) Applicant: Pioneer Square Brands, Inc., High Point, NC 27260-1657 (US)
(72) Inventor: Forbes, Quentin Wade, Winston Salem, NC 27107 (US)
(74) Representative: FRKelly

(57) **Abstract**

A system for at least one portable electronic device includes (I) at least one data-power port; (II) a data-only port electrically coupled to the at least one data-power port; and (III) an electrical power-only port electrically coupled to the at least one data-power port, wherein the at least one data-power port, the data-only port, and the electrical power-only port are structurally separate from one another. Other aspects are described in the claims, drawings, and text forming a part of the present disclosure.

## Description

In addition to the foregoing, other aspects are described in the claims, drawings, and text forming a part of the disclosure set forth herein. Various other aspects are set forth and described in the teachings such as text (e.g., claims and/or detailed description) and/or drawings of the present disclosure. The foregoing is a summary and thus may contain simplifications, generalizations, inclusions, or omissions of detail; consequently, those skilled in the art will appreciate that the summary is illustrative only and is NOT intended to be in any way limiting. Other aspects, features, and advantages of the devices and/or processes and/or other subject matter described herein will become apparent in the teachings set forth herein.

### BRIEF DESCRIPTION OF THE FIGURES

For a more complete understanding of implementations, reference now is made to the following descriptions taken in connection with the accompanying drawings. The use of the same symbols in different drawings typically indicates similar or identical items, unless context dictates otherwise.

With reference now to the figures, shown are one or more examples of Enhanced Data-Power System for Electronic Devices, articles of manufacture, compositions of matter for same that may provide context, for instance, in introducing one or more processes and/or devices described herein.
Figure 1 is a top perspective view of a power adapter.
Figure 2 is a top plan view of the power adapter of Figure 1.
Figure 3 is a front perspective view of a computer assembly.
Figure 4 is a schematic of a circuit assembly.
Figure 5 is a rear perspective view of a device data-power station assembly.
Figure 6 is a rear elevational view of the device data-power station assembly of Figure 5.
Figure 7 is a top plan view of the device data-power station assembly of Figure 5.
Figure 8 is a top plan enlarged view of a device bay portion of the device data-power station assembly of Figure 5.
Figure 9 is a top plan enlarged view of an interface portion of the device bay portion of Figure 8.
Figure 10 is a front perspective view of the device data-power station assembly of Figure 5 coupled with portable electronic devices.
Figure 11 a top plan view of a data-power cable.
Figure 12 is a front perspective view of device data-power station assembly of Figure 5 coupled with the power adapter of Figure 1 and coupled with the computer assembly of Figure 3.
Figure 13 is a side elevational view of device data-power station assembly of Figure 5 coupled with the power adapter of Figure 1 and coupled with the computer assembly of Figure 3.
Figure 14 is a rear perspective view of device data-power station assembly of Figure 5 coupled with the power adapter of Figure 1 and coupled with the computer assembly of Figure 3.
Figure 15 is a top plan view of device data-power station assembly of Figure 5 coupled with the power adapter of Figure 1 and coupled with the computer assembly of Figure 3.
Figure 16 is a perspective view of a device data-power dongle assembly.
Figure 17 is a side elevational view of the device data-power dongle assembly of Figure 16.
Figure 18 is a top perspective view of device data-power dongle assembly of Figure 16 coupled with the power adapter of Figure 1 and coupled with the computer assembly of Figure 3.

### DETAILED DESCRIPTION

In the following detailed description, reference is made to the accompanying drawings, which form a part hereof. In the drawings, similar symbols typically identify similar components, unless context dictates otherwise. The illustrative implementations described in the detailed description, drawings, and claims are not meant to be limiting. Other implementations may be utilized, and other changes may be made, without departing from the spirit or scope of the subject matter presented here.

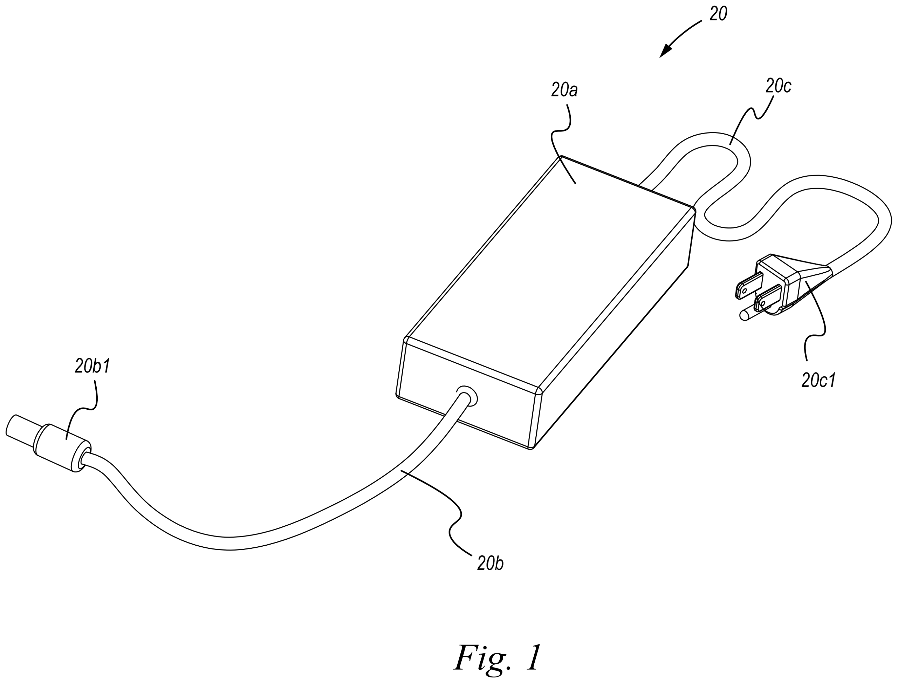

Turning to Figure 1, depicted therein is a top perspective view of a power adapter 20 including power brick 20a, DC power cord 20b with DC plug 20b1, and AC power cord 20c with AC plug 20c1.

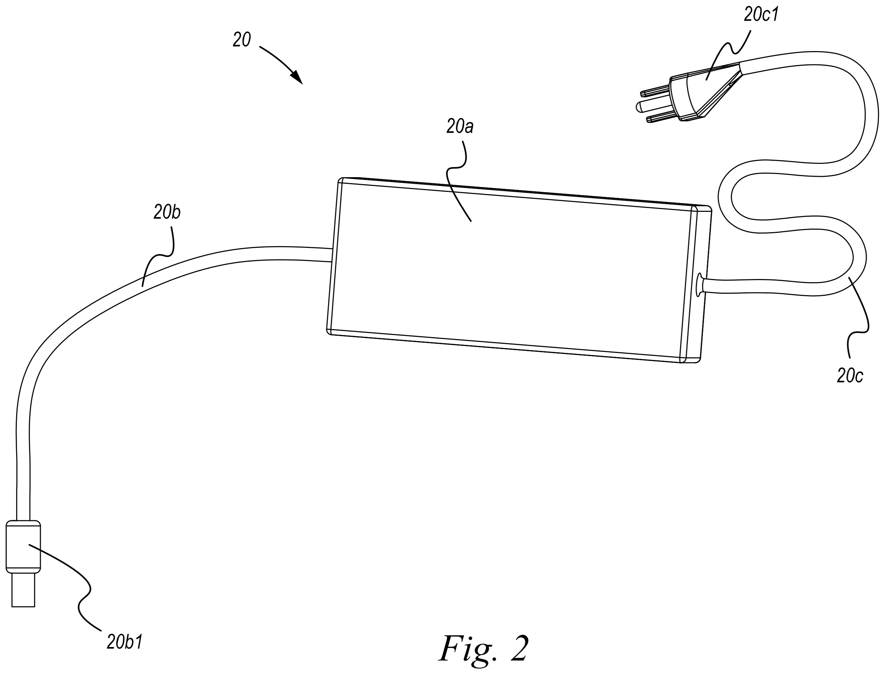

Turning to Figure 2, depicted therein is a top plan view of power adapter 20.

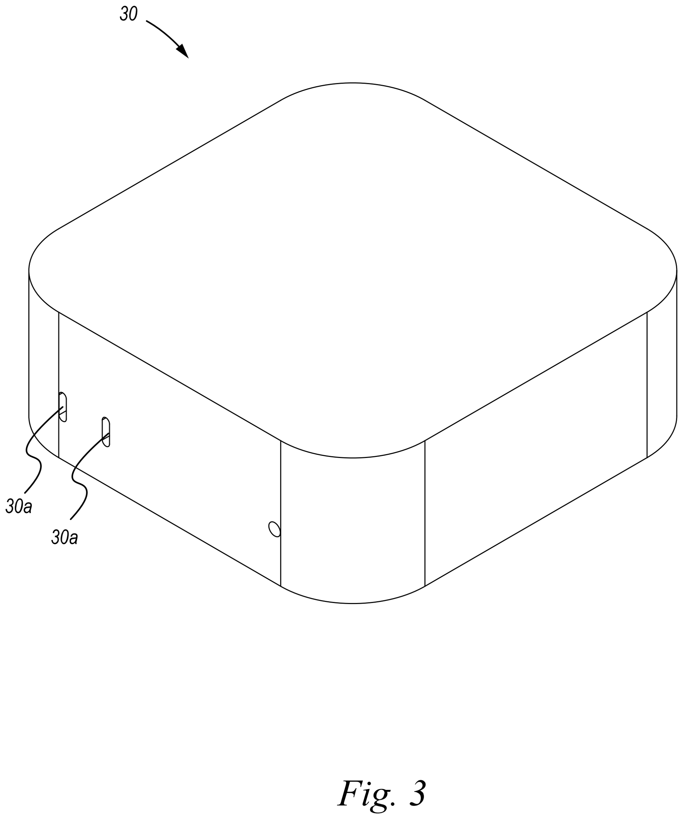

Turning to Figure 3, depicted therein is a front perspective view of computer assembly 30 with elongated member 30a.

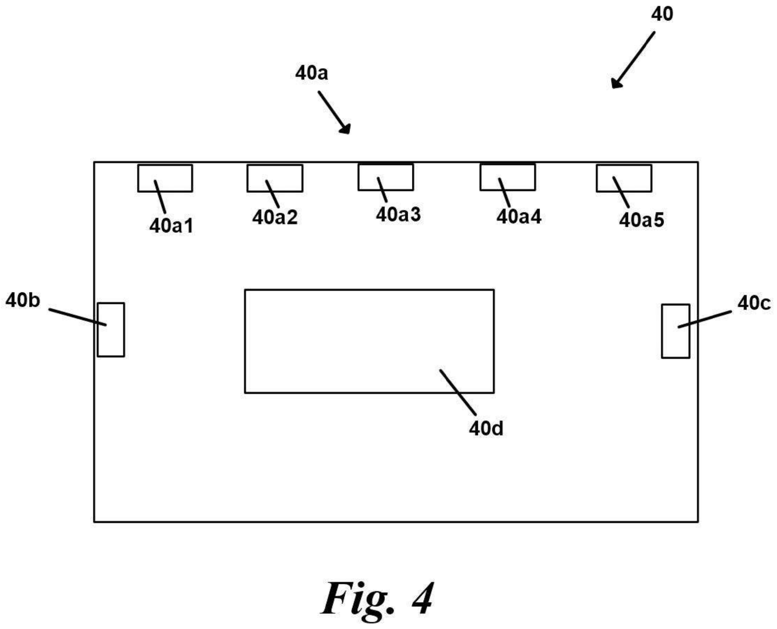

Turning to Figure 4, depicted therein is circuit assembly 40 including data-power interface 40a with data-power port 40a1, data-power port 40a2, data-power port 40a3, data-power port 40a4, and data-power port 40a5, DC power-only input port 40b, data-only port 40c, and circuitry 40d.

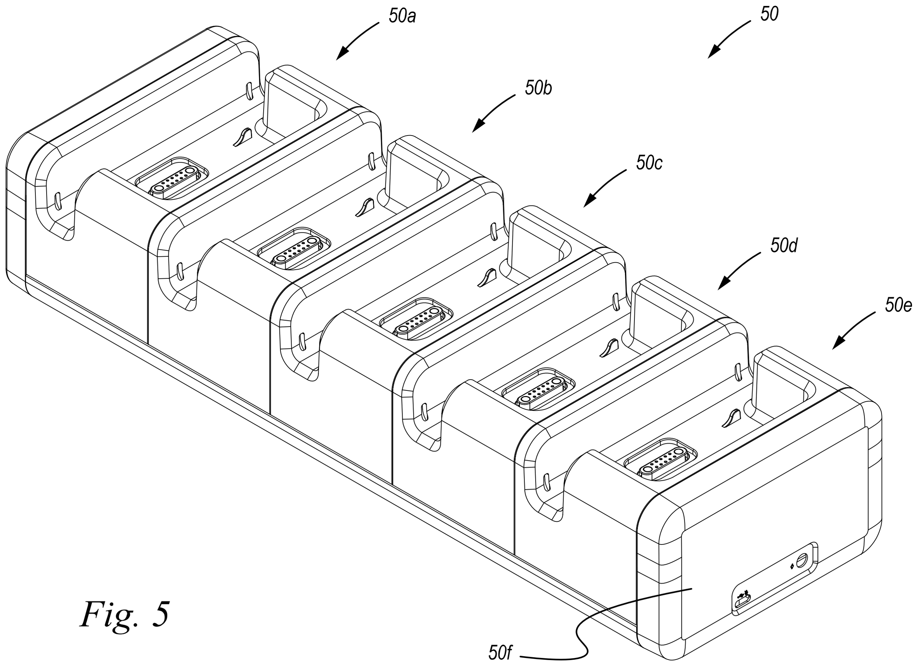

Turning to Figure 5, depicted therein is a rear perspective view of device data-power station assembly 50 including device bay portion 50a, device bay portion 50b, device bay portion 50c, device bay portion 50d, device bay portion 50e, and side 50f.

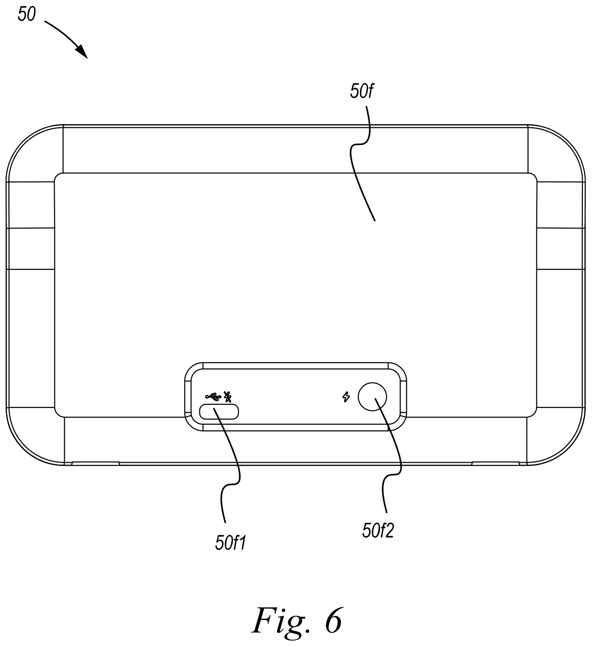

Turning to Figure 6, depicted therein is a rear elevational view of device data-power station assembly 50 with data-only port 50f1, and DC power-only input port 50f2.

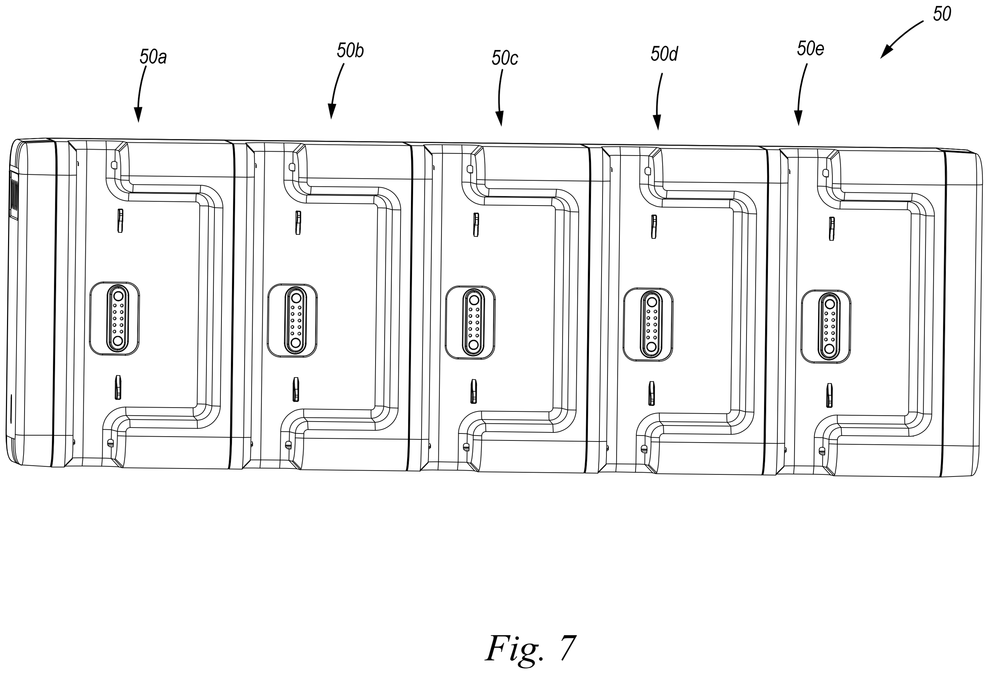

Turning to Figure 7, depicted therein is a top plan view of device data-power station assembly 50.

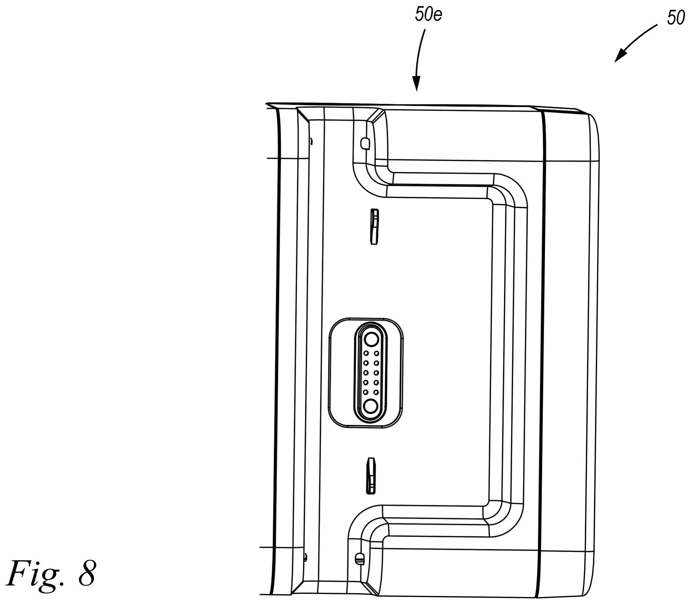

Turning to Figure 8, depicted therein is a top plan enlarged view of device bay portion 50e of device data-power station assembly 50.

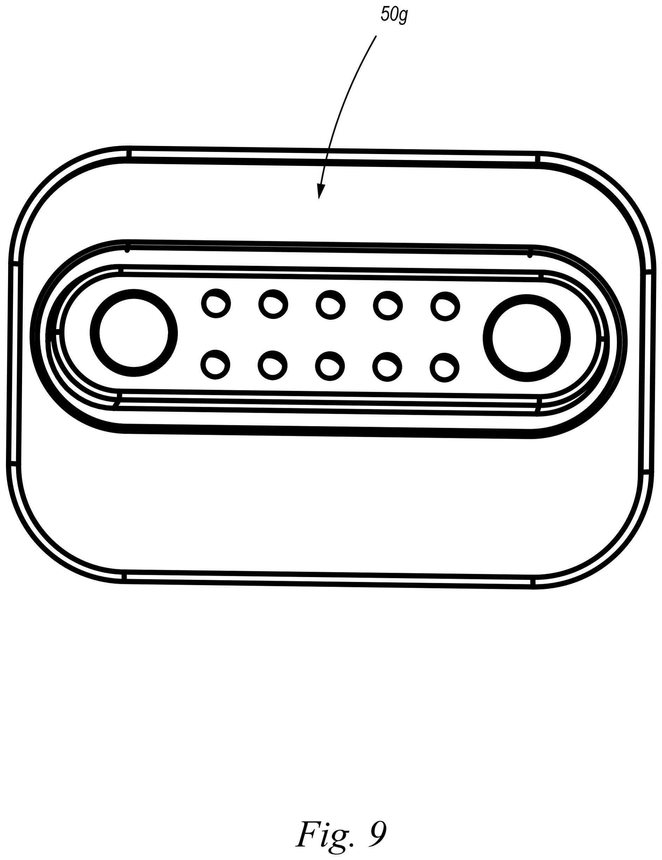

Turning to Figure 9, depicted therein is a top plan enlarged view of data-power port 50g of device bay portion 50e of device data-power station assembly 50.

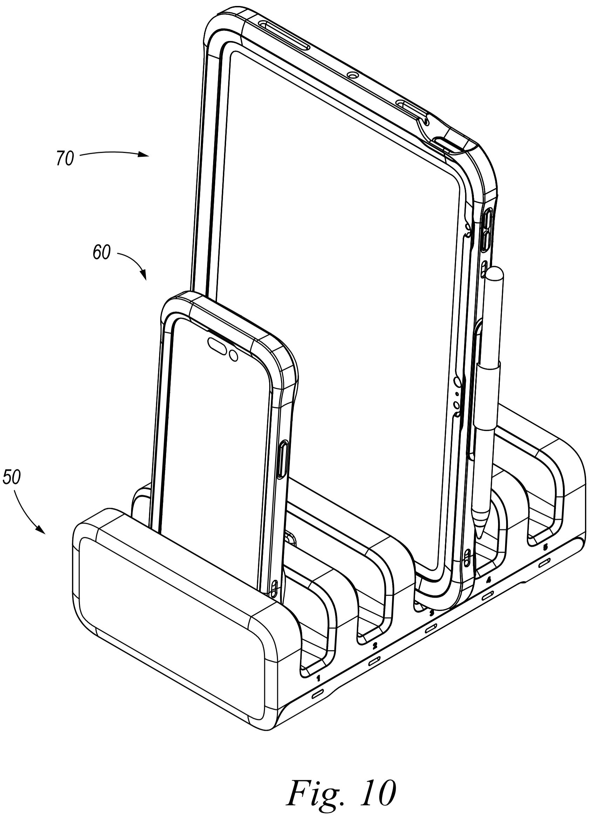

Turning to Figure 10, depicted therein is a front perspective view of device data-power station assembly 50 coupled with portable electronic device 60 and portable electronic device 70.

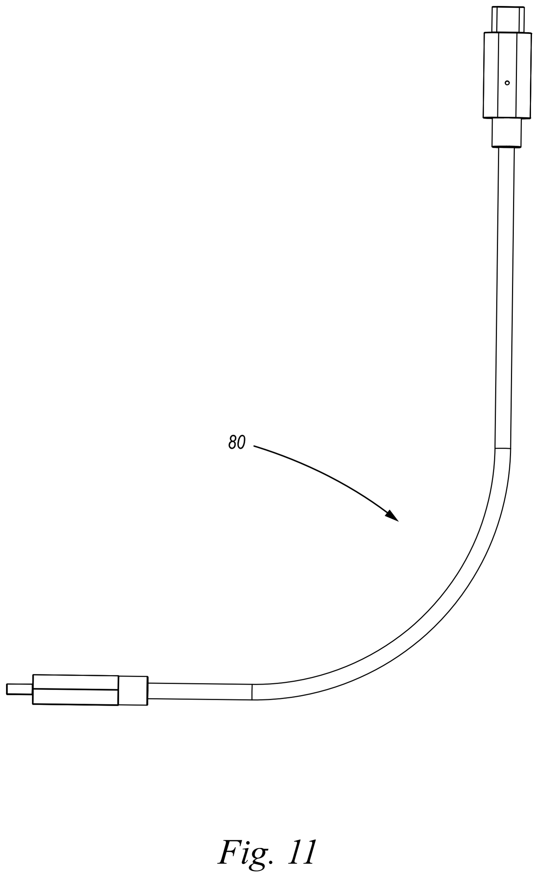

Turning to Figure 11, depicted therein a top plan view of data cable 80.

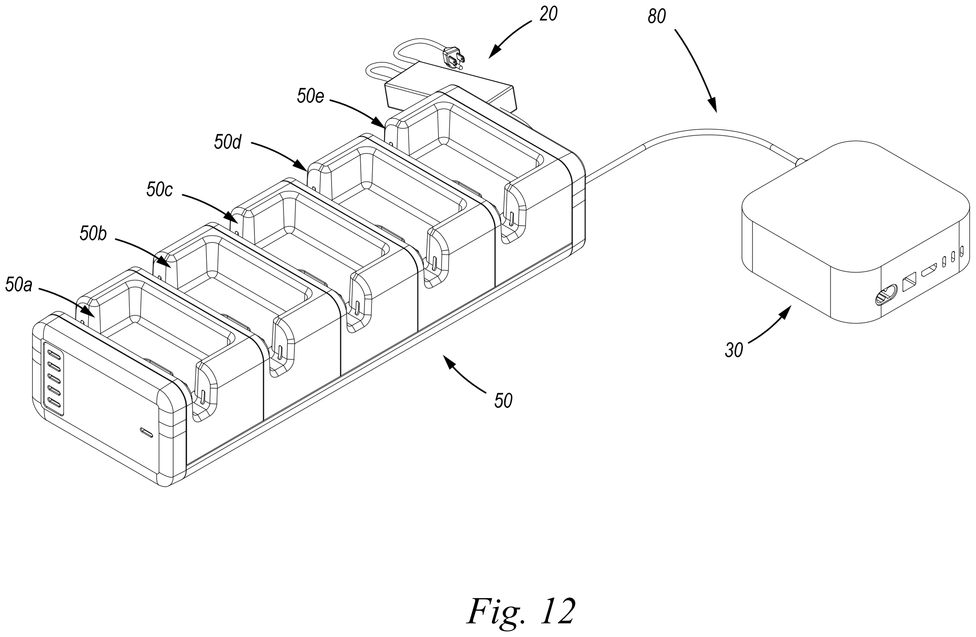

Turning to Figure 12, depicted therein is a front perspective view of device data-power station assembly 50 coupled with power adapter 20 and computer assembly 30.

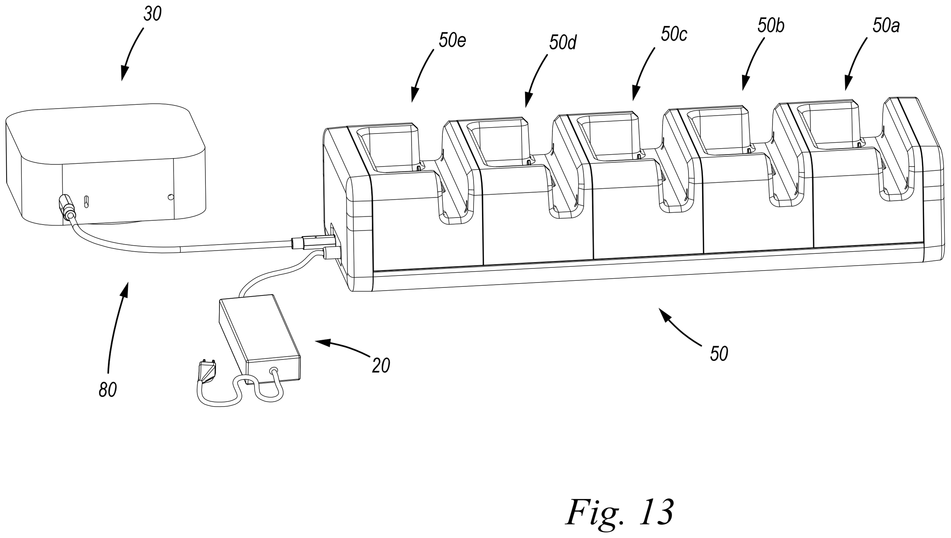

Turning to Figure 13, depicted therein is a side elevational view of device data-power station assembly 50 coupled with power adapter 20 and computer assembly 30.

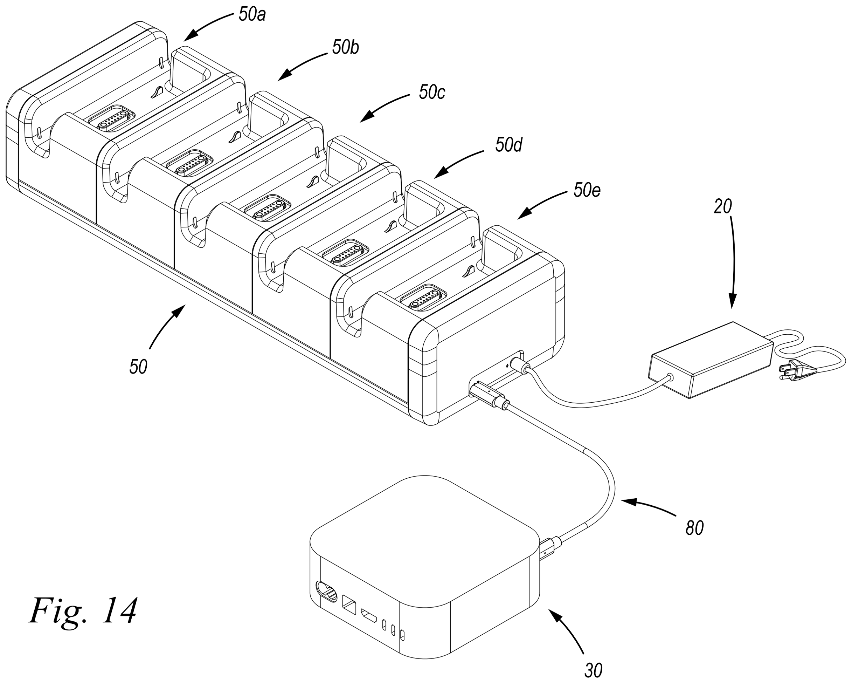

Turning to Figure 14, depicted therein is a rear perspective view of device data-power station assembly 50 coupled with power adapter 20 and computer assembly 30.

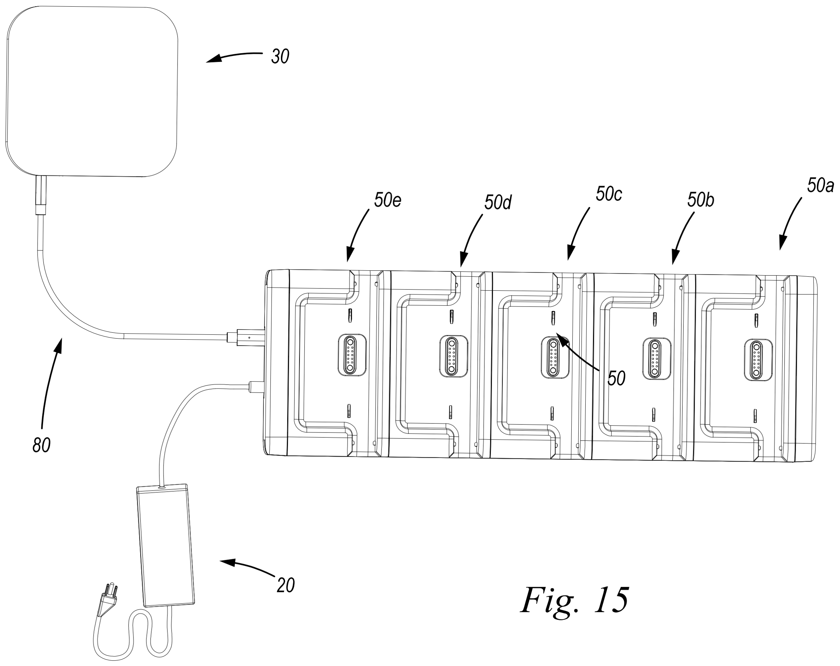

Turning to Figure 15, depicted therein is a top plan view of device data-power station assembly 50 coupled with power adapter 20 and computer assembly 30.

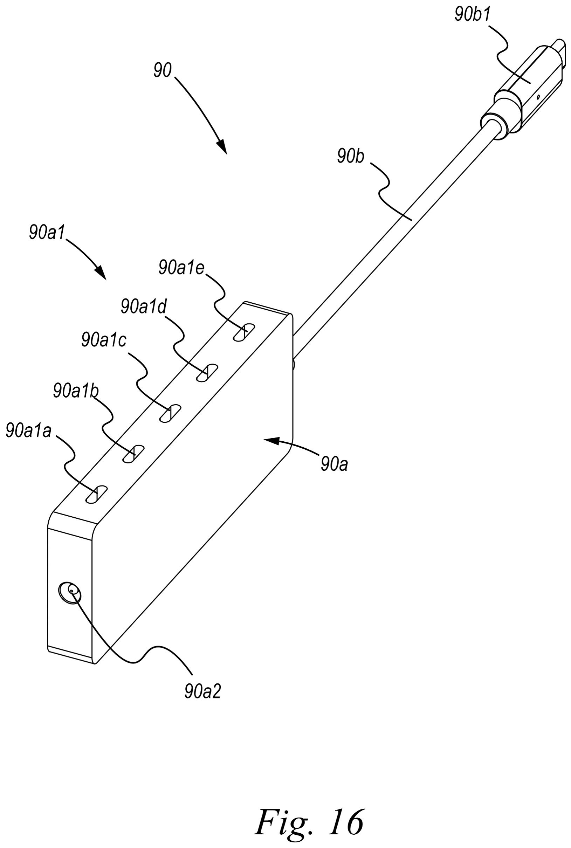

Turning to Figure 16, depicted therein is a perspective view of device data-power dongle assembly 90 including data-power dongle 90a with data-power interface 90a1 having data-power port 90ala, data-power port 90alb, data-power port 90alc, data-power port 90ald, and data-power port 90ale, and with DC power-only input port 90a2, and including data-only cable 90b with data plug 90b1 (e.g., also known as a type of data-only port).

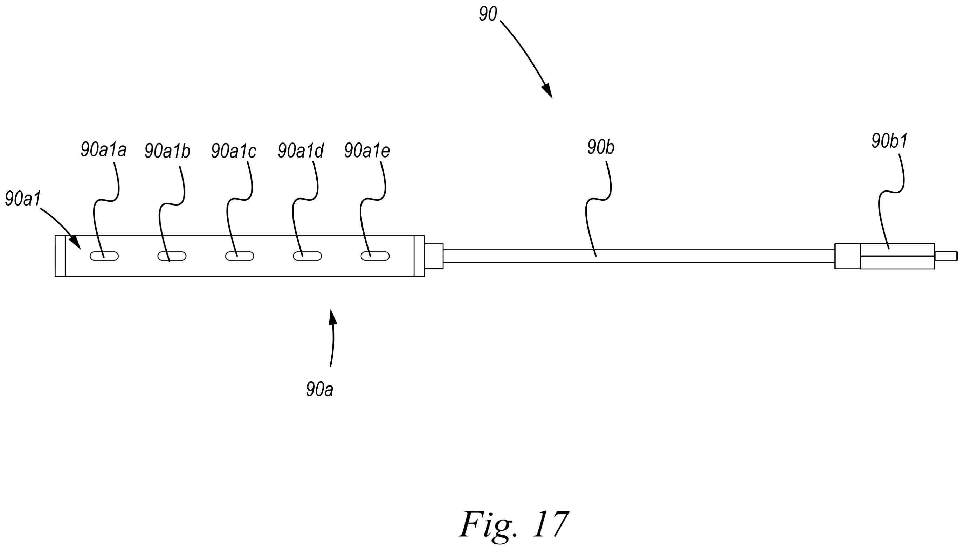

Turning to Figure 17, depicted therein is a side elevational view of device data-power dongle assembly 90.

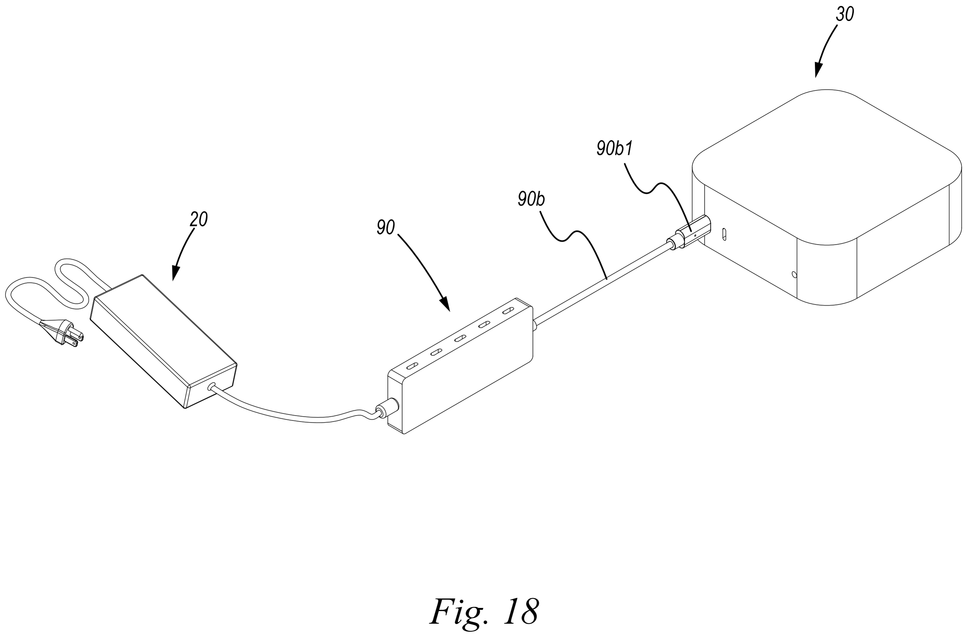

Turning to Figure 18, depicted therein is a top perspective view of device data-power dongle assembly 90 coupled with power adapter 20 and coupled with computer assembly 30.

While particular aspects of the present subject matter described herein have been shown and described, it will be apparent to those skilled in the art that, based upon the teachings herein, changes and modifications may be made without departing from the subject matter described herein and its broader aspects and, therefore, the appended claims are to encompass within their scope all such changes and modifications as are within the true spirit and scope of the subject matter described herein. It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to claims containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations). Furthermore, in those instances where a convention analogous to "at least one of A, B, and C, etc." is used, in general such a construction is intended in the sense one having skill in the art would understand the convention (e.g., " a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., " a system having at least one of A, B, or C" would include but not be limited to systems that have A alone, B alone, C alone, A and B together, A and C together, B and C together, and/or A, B, and C together, etc.). It will be further understood by those within the art that typically a disjunctive word and/or phrase presenting two or more alternative terms, whether in the description, claims, or drawings, should be understood to contemplate the possibilities of including one of the terms, either of the terms, or both terms unless context dictates otherwise. For example, the phrase "A or B" will be typically understood to include the possibilities of "A" or "B" or "A and B."

With respect to the appended claims, those skilled in the art will appreciate that recited operations therein may generally be performed in any order. Also, although various operational flows are presented in a sequence(s), it should be understood that the various operations may be performed in other orders than those which are illustrated, or may be performed concurrently. Examples of such alternate orderings may include overlapping, interleaved, interrupted, reordered, incremental, preparatory, supplemental, simultaneous, reverse, or other variant orderings, unless context dictates otherwise. Furthermore, terms like "responsive to," "related to," or other past-tense adjectives are generally not intended to exclude such variants, unless context dictates otherwise.

## Claims

1. A system for at least one portable electronic device, the system comprising:
(I) at least one data-power port;
(II) a data-only port electrically coupled to the at least one data-power port; and
(III) an electrical power-only input port electrically coupled to the at least one data-power port, wherein the at least one data-power port, the data-only port, and the electrical power-only input port are structurally separate from one another.

2. The system of Claim 1
wherein the at least one data-power port, the data-only port and the electrical power-only input port are incorporated into a device data-power station assembly for the at least one portable electronic device.

3. The system of Claim 1
wherein the at least one data-power port, the data-only port and the electrical power-only input port are incorporated into a device data-power dongle assembly for the at least one portable electronic device.

4. The system of Claim 1
wherein the at least one data-power port is of a universal serial bus type.

5. The system of Claim 1
wherein the electrical power-only input port is of a direct current type.

6. The system of Claim 1
wherein the data-only port is of a universal serial bus type.

7. The system of Claim 1
wherein the at least one data-power port, the data-only port, and the electrical power-only input port are hardwired together.

8. The system of Claim 1
wherein the at least one data-power port, the data-only port, and the electrical power-only input port are coupled to a printed circuit board.

9. A system for at least one portable electronic device, the system comprising:
(I) a device data-power station assembly for coupling with the at least one portable electronic device, the station assembly including
(A) at least one data-power port;
(B) a data-only port electrically coupled to the at least one data-power port; and
(C) an electrical power-only input port electrically coupled to the at least one data-power port, wherein the at least one data-power port, the data-only port, and the electrical power-only input port are structurally separate from one another.

10. The system of Claim 9
wherein the at least one data-power port is of a universal serial bus type.

11. The system of Claim 9
wherein the electrical power-only input port is of a direct current type.

12. The system of Claim 9
wherein the data-only port is of a universal serial bus type.

13. The system of Claim 9
wherein the at least one data-power port, the data-only port, and the electrical power-only input port are hardwired together.

14. The system of Claim 9
wherein the at least one data-power port, the data-only port, and the electrical power-only input port are coupled to a printed circuit board.

15. A system for at least one portable electronic device, the system comprising:
(I) a device data-power dongle assembly for holding the at least one portable electronic device, the device data-power dongle assembly including
(A) at least one data-power port;
(B) a data-only port electrically coupled to the at least one data-power port; and
(C) an electrical power-only input port electrically coupled to the at least one data-power port,
wherein the at least one data-power port, the data-only port, and the electrical power-only input port are structurally separate from one another.

16. The system of Claim 15
wherein the at least one data-power port is of a universal serial bus type.

17. The system of Claim 15
wherein the electrical power-only input port is of a direct current type.

18. The system of Claim 15
wherein the data-only port is of a universal serial bus type.

19. The system of Claim 15
wherein the at least one data-power port, the data-only port, and the electrical power-only input port are hardwired together.

20. The system of Claim 15
wherein the at least one data-power port, the data-only port, and the electrical power-only input port are coupled to a printed circuit board.
